# FASCICULE DE BREVET EUROPEEN

(11) **EP 1 108 574 B1**
(45) Date de publication et mention de la délivrance du brevet: **25.04.2007**
(21) Numéro de dépôt: 00126470.4
(22) Date de dépôt: 07.12.2000
(51) Int. Cl.: B60H 1/00

(54) **Diffusion d'air dans un habitacle d'automobile**
Verteilung von Luft im Fahrzeuginnenraum
Distribution of air in the passenger compartment of a vehicle

(30) Priorité: 13.12.1999 FR 9915653
(43) Date de publication de la demande: 20.06.2001
(73) Titulaire: VALEO SYSTEMES THERMIQUES, 78321 Le Mesnil St Denis Cedex (FR)
(72) Inventeur: Elliot, Gilles, 91080 Courcouronnes (FR)

(56) Documents cités:
- FR-A- 2 756 801
- GB-A- 2 302 404
- US-A- 5 113 748

## Description

L'invention concerne un dispositif de chauffage, ventilation et/ou climatisation de l'habitacle d'un véhicule automobile, du type comportant des moyens de traitement d'air logeant, au moins en partie, dans un boîtier muni de sorties d'air, la sortie de dégivrage et les sorties d'aération débouchant dans une face supérieure de forme déterminée du boîtier et étant susceptibles d'alimenter en air traité au moins une bouche de dégivrage et des bouches d'aération prévues dans une façade d'une planche de bord par des conduits reliant lesdites sorties auxdites bouches, ladite planche de bord comportant une façade supérieure et une façade frontale. Le document US 5113748, qui est considéré comme l'état de l'art le plus proche, divulgue un tel dispositif.

Aujourd'hui, l'acheminement de l'air de l'appareil de climatisation vers les bouches de dégivrage et d'aération se fait par le montage bout à bout de plusieurs pièces dont l'assemblage est effectué lors du montage du poste de conduite. En outre, les bouches d'aération sont habituellement déposées sur la façade frontale de la planche de bord dans l'enveloppe de portée de main du conducteur ou du passager avant et comportent notamment une bouche d'aération centrale située au-dessus de la console centrale, et deux bouches latérales d'aération. Ces bouches d'aération, ayant des surfaces diffusantes limitées, délivrent un air d'aération à grande vitesse. En outre, la disposition de la bouche d'aération centrale au-dessus de la console centrale limite le volume de cette dernière.

La norme internationale ISO 3958 du 15/02/1996 définit des zones de portée de mains pour le conducteur d'un véhicule automobile. Ces zones sont définies comme étant incluses à l'intérieur de l'enveloppe extérieure de deux sphères définies géométriquement par rapport au siège du conducteur. Chaque sphère correspond au débattement d'une main du conducteur. Les zones de portée de mains du passager peuvent être déduites par symétrie par rapport au plan de symétrie de l'habitacle.

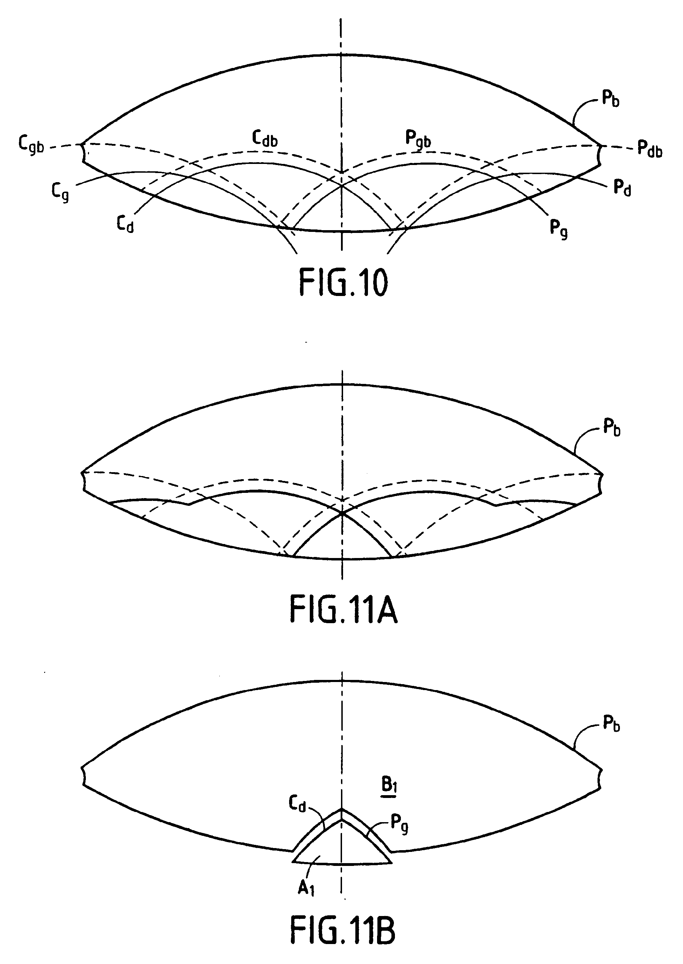

Sur la figure 10 on a représenté par les références :
Pb - l'enveloppe extérieure de la planche de bord d'un véhicule automobile,
Cd - l'enveloppe extérieure du débattement de la main droite du conducteur, correspondant à une préhension avec trois doigts,
Cg - l'enveloppe extérieure du débattement de la main gauche du conducteur, correspondant à une préhension avec trois doigts,
Pg - l'enveloppe extérieure du débattement de la main gauche du passager, correspondant à une préhension avec trois doigts,
Pd - l'enveloppe extérieure du débattement de la main droite du passager, correspondant à une préhension avec trois doigts,
Cgb - l'enveloppe extérieure du débattement de la main gauche du conducteur correspondant à une préhension du bout des doigts,
Cdb - l'enveloppe extérieure du débattement de la main droite du conducteur correspondant à une préhension du bout des doigts,
Pgb - l'enveloppe extérieure du débattement de la main gauche du passager correspondant à une préhension du bout des doigts,
Pdb - l'enveloppe extérieure du débattement de la main droite du passager correspondant à une préhension du bout des doigts.

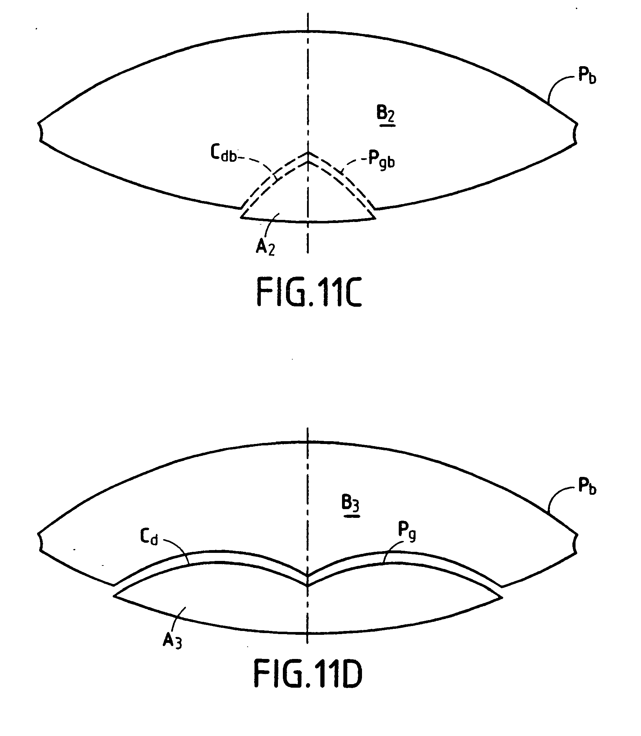

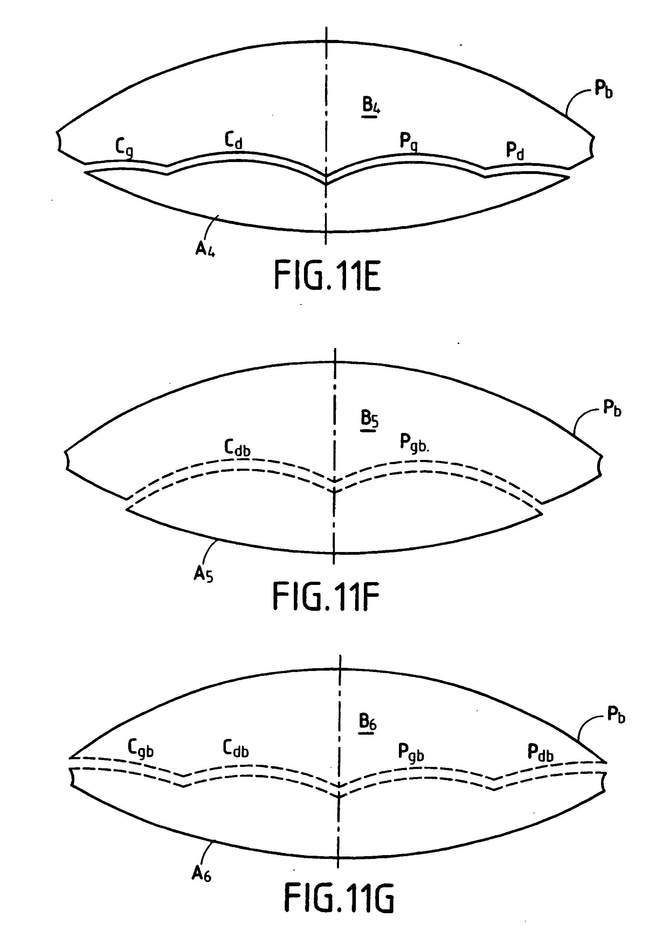

Ces différentes enveloppes sphériques coupent l'enveloppe extérieure Pb de la planche de bord selon des lignes curvilignes qui partagent l'enveloppe extérieure Pb de la planche de bord en différentes zones, accessibles ou non accessibles par les doigts d'une main du conducteur ou du passager suite à une préhension avec trois doigts ou du bout des doigts. Ces lignes courbes et les zones correspondantes sont montrées sur les figures 11a à 11 g.

La zone A1 est la partie de la planche de bord qui se trouve dans l'intersection des enveloppes Cd et Pg.

La zone B1 est complémentaire de la zone A1 dans l'enveloppe Pb de la planche de bord.

La zone A2 est la partie de la planche de bord qui se trouve dans l'intersection des enveloppes Cdb et Pgb.

La zone B2 est complémentaire de la zone A2 dans l'enveloppe Pb de la planche de bord.

La zone A3 est la partie de la planche de bord qui se trouve dans la réunion des enveloppes Cd et Pg.

La zone B3 est complémentaire de la zone A3 dans l'enveloppe Pb de la planche de bord.

La zone A4 est la partie de la planche de bord qui se trouve dans la réunion des enveloppes Cd, Cg, Pd et Pg.

La zone B4 est complémentaire de la zone A4 dans l'enveloppe Pb de la planche de bord.

La zone A5 est la partie de la planche de bord qui se trouve dans la réunion des enveloppes Cdb et Pgb.

La zone B5 est complémentaire de la zone A5 dans l'enveloppe Pb de la planche de bord.

La zone A6 est la partie de la planche de bord qui se trouve dans la réunion des enveloppes Cdb, Cgb, Pdb et Pgb.

La zone B6 est complémentaire de la zone A6 dans l'enveloppe Pb de la planche de bord.

Dans les définitions précédentes, le véhicule est supposé avoir un poste de conduite à gauche. Dans le cas d'un véhicule avec un poste de conduite à droite, il suffit d'inverser les mots conducteur et passager dans les définitions.

Un premier but de l'invention est de proposer une nouvelle architecture des moyens de délivrance de l'air de dégivrage et de l'air d'aération qui permette d'augmenter la place disponible au-dessus de la console dans la zone d'instrumentation centrale du poste de conduite.

Un deuxième but de l'invention est de proposer une nouvelle architecture des moyens de délivrance de l'air de dégivrage et de l'air d'aération qui permette de simplifier le montage du cockpit grâce notamment à une diminution du nombre de pièces.

Un troisième but de l'invention est de proposer une nouvelle architecture des moyens de délivrance de l'air d'aération qui permette, au choix des occupants du véhicule, un mode de diffusion douce, ou un mode de diffusion forcée.

L'invention atteint les deux premiers buts par le fait que les conduits de dégivrage et d'aération sont ménagés dans un module de diffusion oblong qui s'étend transversalement au-dessus de la face supérieure du boîtier et sous la façade supérieure de la planche de bord, ce module comportant dans sa face inférieure une ouverture adaptée à la forme de la face supérieure du boîtier, et sur son bord supérieur avant les portions aval du conduit de dégivrage et des conduits d'aération, les portions aval des conduits d'aération s'étendant transversalement de part et d'autre du conduit de dégivrage et se terminant par des bouches d'aération situées au-dessus de la zone B4 de l'enveloppe Pb de la planche de bord située en dehors de l'intersection A4 des enveloppes extérieures Cg, Cd, Pg, Pb de débattement des mains droite et gauche du conducteur et du passager, correspondant à une préhension avec trois doigts, et dirigées vers l'intérieur de l'habitacle.

Avantageusement, le module de diffusion est obtenu par assemblage de deux pièces à parois minces. Les portions aval des conduits d'aération sont délimitées par deux parois parallèles à section curviligne selon des plans verticaux parallèles au plan médian longitudinal de l'habitacle. Ces deux parois présentent des surfaces convexes du côté avant du module de diffusion, et sont reliées par une pluralité de cloisons verticales.

Pour atteindre le troisième but de l'invention, les bouches d'aération sont équipées d'un système convergent divergent réglable qui permet de faire varier les vitesses de sortie de l'air de manière à obtenir un mode de diffusion douce ou un mode de diffusion forcée. Dans le mode de diffusion douce, la surface diffusante totale des bouches d'aération est au moins égale à 2,5 dm².

Le module de diffusion comporte avantageusement des volets de distribution pour répartir l'air entré dans ledit module entre les conduit de dégivrage et les conduits d'aération.

D'autres avantages et caractéristiques de l'invention ressortiront à la lecture de la description suivante faite à titre d'exemple et en référence aux dessins annexés dans lesquels :

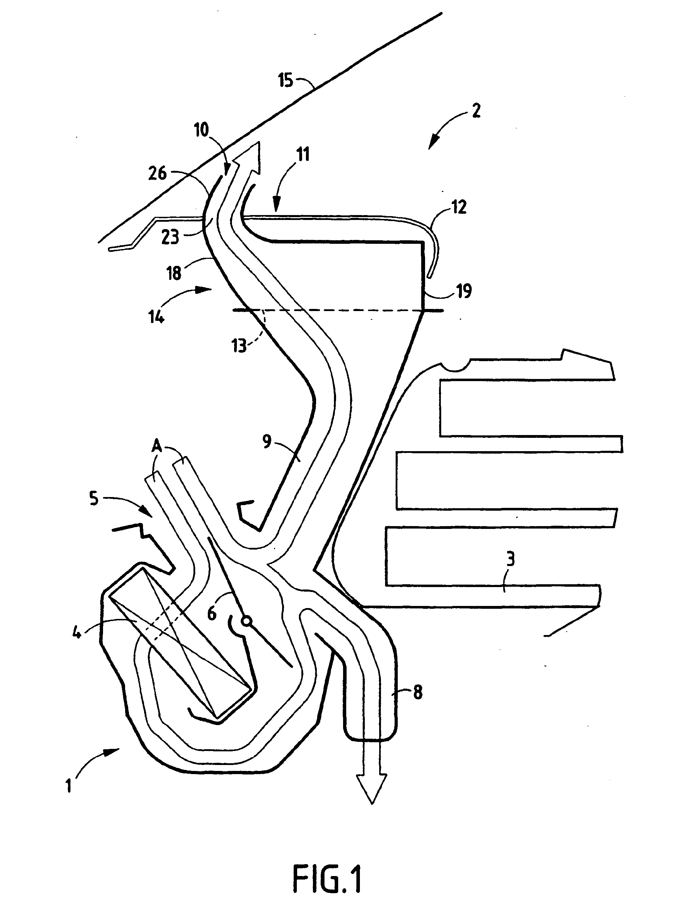

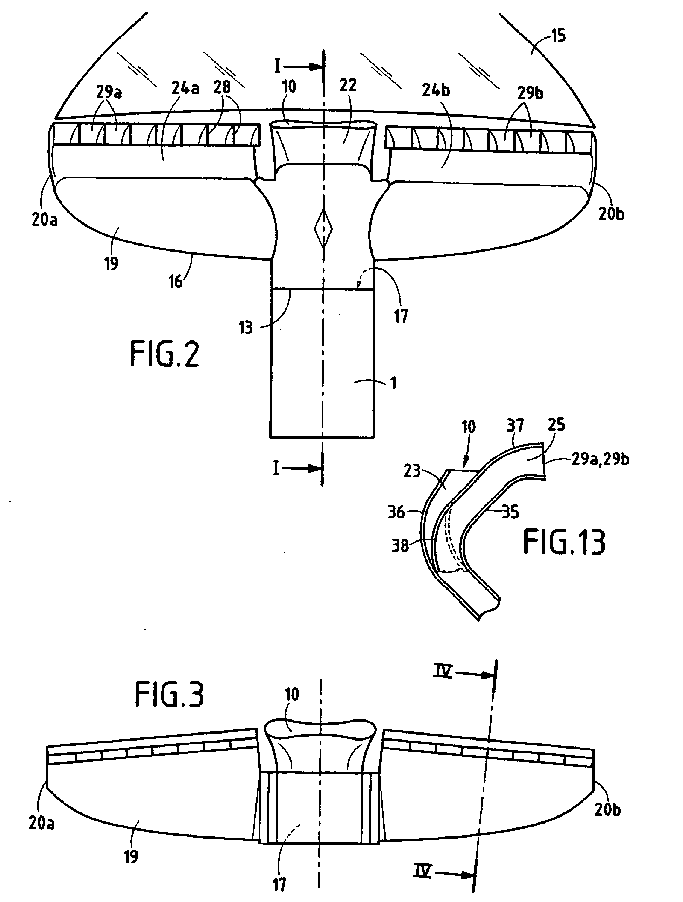

la figure 1 est une coupe schématique selon le plan vertical médian du cockpit d'un véhicule équipé du dispositif de climatisation selon l'invention selon la ligne I-I de la figure 2 ;
la figure 2 est une vue frontale de l'arrière du dispositif de climatisation de la figure 1 ;
la figure 3 est une vue de dessus du dispositif de climatisation de la figure 1 ;
la figure 4 est une coupe du module de diffusion selon la ligne IV-IV de la figure 3 ;
la figure 5 montre les moyens de réglage de la vitesse de l'air dans les bouches d'aération en mode diffusion forcée ;
la figure 6 montre les moyens de réglage de la vitesse de l'air dans les bouches d'aération en mode de diffusion douce ;
la figure 7 est une vue en perspective du module de diffusion selon l'invention ;
la figure 8 est une vue, en perspective et en éclaté, de l'arrière du module de diffusion ;
la figure 9 est une vue, en perspective et en éclaté, de l'avant du module de diffusion ;
la figure 10 est une représentation schématique, vue de dessus, de la planche de bord et des enveloppes extérieures du débattement des mains du conducteur et du passager, correspondant à une préhension avec trois doigts, et à une préhension du bout des doigts ;
les figures 11a à 11g montrent les zones de l'enveloppe de la planche de bord accessibles et inaccessibles par les différentes mains du conducteur et du passager correspondant à une préhension avec trois doigts ou à une préhension du bout des doigts ;
la figure 13 montre une variante de réalisation du conduit de dégivrage ;
la figure 14 montre en perspective un volet tambour à trois conduits permettant de sélectionner des zones de sorties d'air d'une bouche d'aération ;
les figures 15 à 15d montrent différentes portions du volet tambour de la figure 14 ; et
les figures 16a à 16c montrent des dispositifs de réglage du débit d'air.

Les figures 10 et 11a à 11g ont été commentés en introduction et ne nécessitent pas d'explications complémentaires.

Les dessins montrent un dispositif de chauffage, ventilation et/ou climatisation de l'habitacle d'un véhicule automobile, qui comporte dans un boîtier 1, disposé dans la zone médiane du cockpit 2 du véhicule et à l'avant d'une console centrale 3, des moyens 4 pour réchauffer une partie d'un air A délivré par un groupe motoventilateur non représenté sur les dessins. L'air A entre dans le boîtier 1 par une entrée 5, puis est séparé par un volet de réglage de température 6, en un premier flux supérieur, et en un deuxième flux inférieur qui transite par une branche de réchauffage dans laquelle est installé un échangeur de chaleur 4. Les deux flux se rejoignent ensuite dans une zone de mixage 7, d'ou l'air traité alimente un conduit inférieur 8, destiné à réchauffer les zones inférieures de l'habitacle, et notamment les pieds des passagers avant, et un conduit supérieur 9, sensiblement vertical, disposé derrière la console 3. Le conduit supérieur 9 est destiné à alimenter, en air de dégivrage, une branche de dégivrage 10 disposée dans la façade supérieure 11 de la planche de bord 12, et, en air d'aération, des bouches d'aération, également disposées dans la façade supérieure 11, de la planche de bord 12. Le conduit supérieur 9 débouche dans une face supérieure 13, de forme globalement rectangulaire, du boîtier 1. Cette face supérieure 13 s'étend de préférence dans un plan sensiblement horizontal, en dessous de la façade supérieure 11 de la planche de bord 12 et à l'avant de la console centrale 3.

Un module de diffusion 14 oblong, s'étend sur toute la largeur de l'habitacle H et à l'arrière du pied du pare-brise 15, et est disposé entre la face supérieure 13 du boîtier 1 et la façade supérieure 11 de la planche de bord 12. Ce module de diffusion 14, qui comporte uniquement des parois minces délimitant les conduits d'air alimentant la bouche de dégivrage 10 et les bouches d'aération, présente, sur sa paroi inférieure 16, une ouverture 17 qui s'adapte sur la face supérieure 13 du boîtier 1 et qui permet l'introduction de l'air délivré par l'orifice de la face supérieure 13 du boîtier 1 à l'intérieur du module de diffusion 14.

Le module de diffusion 14 se présente sous la forme d'une boîte délimitée par la paroi inférieure 16, une paroi avant 18 verticale, une paroi arrière verticale 19, dont les extrémités latérales 20a, 20b rejoignent les extrémités latérales de la paroi avant 18, et une paroi supérieure 21, sensiblement horizontale disposée sous la façade supérieure 13 de la planche de bord 12. La paroi avant 18 et la paroi arrière 19 sont raccordées à la paroi inférieure 16. La paroi supérieure 21 est également raccordée à la paroi arrière 19.

La paroi supérieure 21 se prolonge, vers le pare brise 15, au-delà de la paroi avant 19, par trois portions de paroi, à section curviligne selon des plans verticaux parallèles au plan médian vertical du cockpit 2, et dirigées vers le haut. La portion de paroi centrale 22 constitue la face arrière du conduit de dégivrage 23. Les portions de paroi latérales 24a et 24b, disposées de part et d'autre de la portion centrale 22, forment les faces arrière des conduits d'aération 25a et 25b. Ces deux portions de paroi latérales 24a et 24b s'étendent latéralement jusqu'aux extrémités de la paroi supérieure 21.

La paroi avant 18 a une hauteur inférieure à la hauteur de la paroi arrière 19. La face avant du conduit de dégivrage 23 est formé par une paroi curviligne 26, raccordée à l'extrémité supérieure de la paroi avant 18, et dont les bords latéraux sont raccordés à la portion de paroi centrale 22 de la paroi supérieure 21. La bouche 10 du conduit de dégivrage 23 est dirigée vers le pare brise 15. Les faces avant des conduits d'aération 25a et 25b sont formées par des parois à section curviligne 27a et 27b, sensiblement parallèles aux portions de paroi latérales 24a et 24b de la paroi supérieure 21. Ces parois 27a et 27b sont raccordées à l'extrémité supérieure de la paroi avant 18, et raccordées latéralement aux portions de paroi latérales 24a et 24b, afin de former les portions aval des conduits d'aération 25a et 25b.

Les parois avant et arrière des conduits d'aération présentent des surfaces convexes vues de l'avant du cockpit 2, sensiblement en forme de demi-cylindre, et elles sont reliées par une pluralité de cloisons verticales 28, destinées à canaliser l'air d'aération dans des plans verticaux sensiblement parallèles au plan médian du cockpit 2. Les bouches d'aération 29a et 29b sont disposées au-dessus de la façade supérieure 13 de la planche de bord 12 et sont dirigées vers l'intérieur de l'habitacle. La surface diffusante de ces bouches d'aération 29a et 29b est au moins égale à 2,5 dm², afin de permettre une diffusion douce de l'air d'aération. Avec une surface diffusante de cette valeur, l'air d'aération sort des bouches d'aération 29a et 29b à faible vitesse, et il n'y a pas de turbulence dans l'habitacle.

La paroi avant 18 du module de diffusion 14 présente éventuellement des renfoncements non montrés sur les dessins destinés à loger des indicateurs du poste de conduite. La planche de bord 12 est de préférence réalisée sous la forme d'une coiffe qui recouvre le module de diffusion 14.

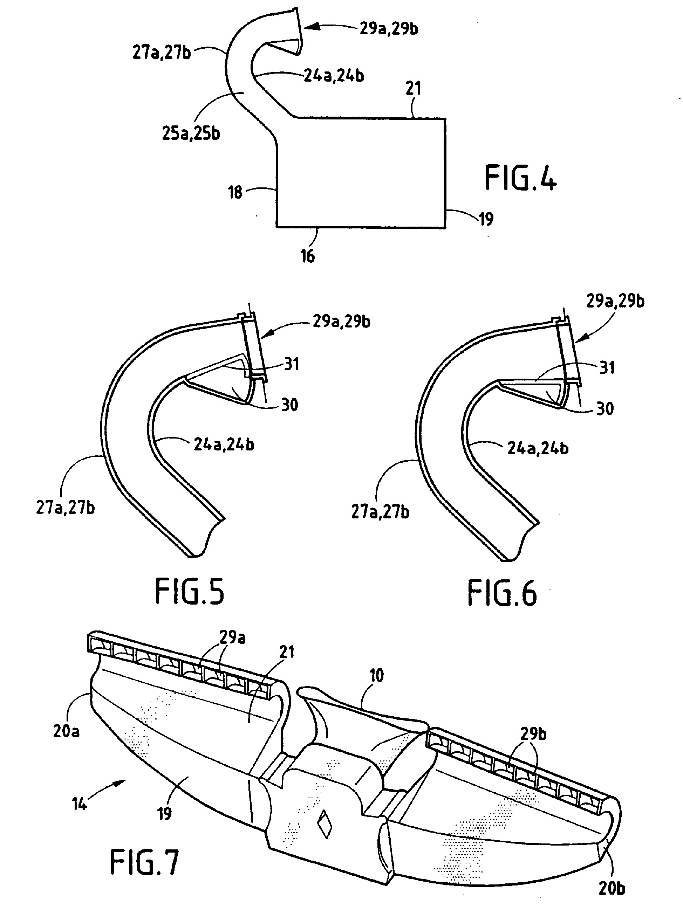

Ainsi que cela est montré sur les figures 5 et 6, les portions de paroi latérales 24a et 24b sont mises en forme de manière à ménager, près de leur extrémité supérieure, un logement 30 pour un volet de réglage 31 de l'ouverture des bouches d'aération 29a et 29b. Le volet de réglage 31 est commandé du poste de conduite et permet de régler les vitesses de sortie de l'air d'aération, de manière à obtenir un mode de diffusion forcée dans une position convergente du volet 31 et un mode de diffusion douce dans une position divergente du volet 31.

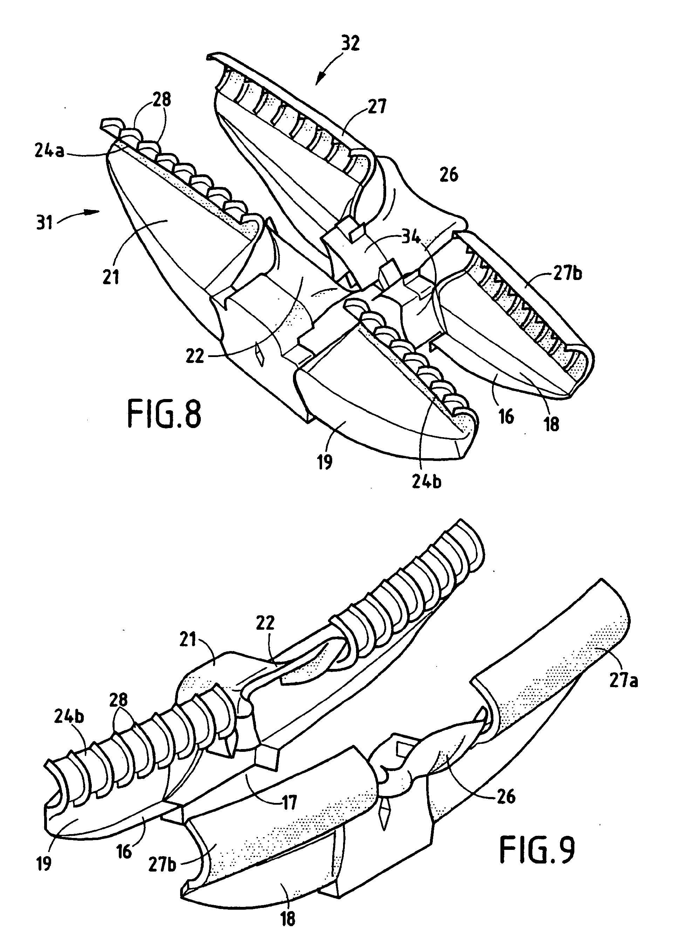

Le module de diffusion 14 est obtenu par assemblage de deux pièces à paroi mince, 32 et 33, réalisées par moulage d'un matériau plastique selon un procédé connu, par injection par exemple. Le plan de joint de ces deux pièces passe par la paroi inférieure 16, le conduit de dégivrage 23 et les conduits d'aération 25a et 25b, ainsi que cela est montré sur les figures 8 et 9.

Des volets de distribution 34 sont montés sur le module de diffusion 14 lors de son assemblage. Ces volets 34 permettent de distribuer l'air reçu par le module de diffusion 14 entre le conduit de dégivrage 23 et les conduits d'aération 25a, 25b.

Le module de distribution 14, constitué des deux pièces 32 et 33 et équipé des volets 31 et 34, peut être monté et testé avant son montage sur le cockpit.

Dans la description faite ci-dessus, les conduits d'aération 25a et 25b sont disposés latéralement de chaque côté du conduit de dégivrage 25 qui, lui, est situé dans la zone médiane du cockpit.

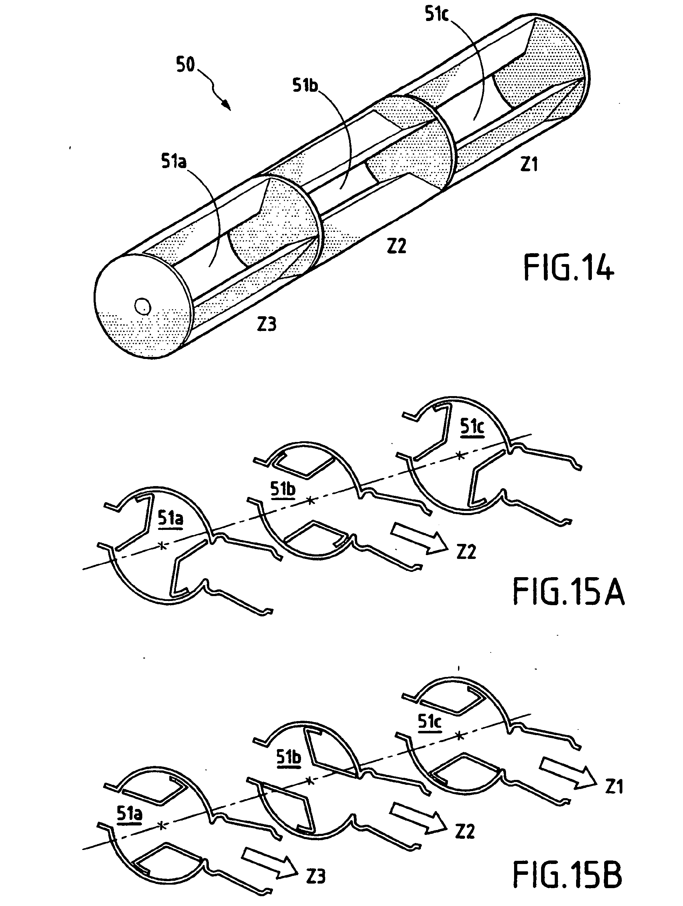

Ainsi que cela est montré sur la figure 13, le module de diffusion 14 peut comporter un seul conduit d'aération 25 qui s'étend latéralement sur toute la largeur de la planche de bord 12, derrière le conduit de dégivrage 23. Dans ce cas, la paroi supérieure 21 du module de diffusion comporte vers l'avant un bord 35 retourné vers le haut, et la paroi avant 18 est prolongée vers l'avant et vers le haut par une paroi curviligne 36 qui forme la face avant du conduit de dégivrage 23. Une paroi intermédiaire 37 est disposée entre le bord 35 et la paroi 36 pour séparer le conduit de dégivrage 23 et le conduit d'aération 25. Un volet de distribution 38 est alors monté à rotation sur l'extrémité inférieure 39 de la paroi intermédiaire 37. La paroi intermédiaire 37 est reliée à la paroi curviligne 36 et au bord 35 par une pluralité de cloisons verticales destinées à canaliser l'air de dégivrage et l'air d'aération.

Les bouches d'aération 29a et 29b sont équipées de manière connue par des ailettes de réglage de l'orientation du flux d'air commandées par des molettes accessibles respectivement par le conducteur et le passager avant.

Selon une autre caractéristique de l'invention, chaque conduit d'aération 25a, 25b est équipé d'un moyen permettant de sélectionner les zones de sortie du flux d'air d'aération.

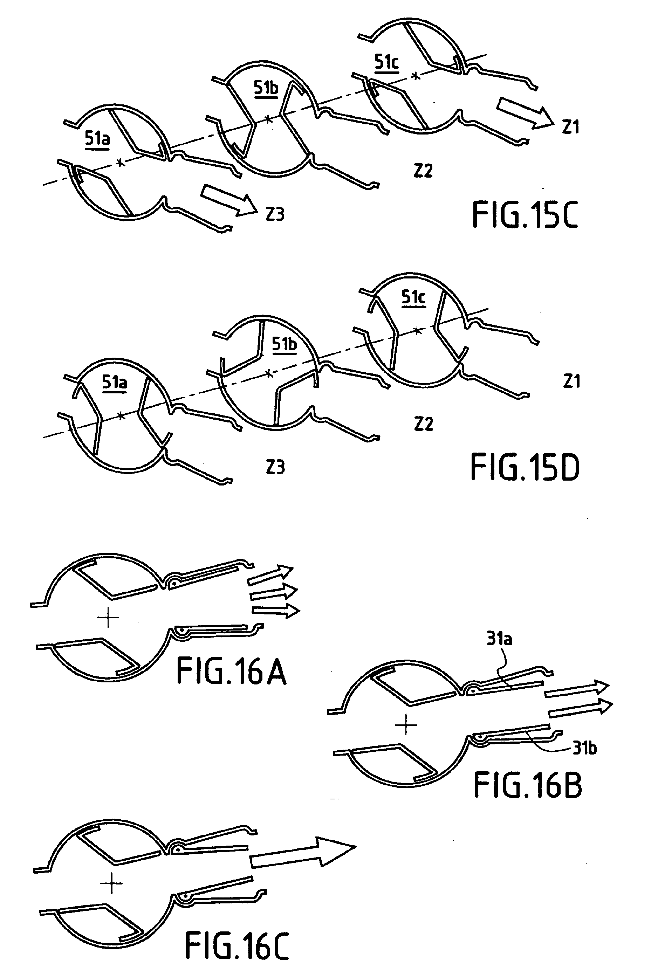

Il peut s'agir, par exemple, ainsi que cela est montré sur les figures 14 et 15a à 15d, d'un volet tambour 50, qui comporte des canaux internes, décalés angulairement autour de l'axe de rotation du volet tambour 50, afin d'alimenter sélectivement des zones Z1, Z2, Z3 de la bouche d'aération correspondante 29 a ou 29b. Le volet tambour 50 peut comporter par exemple trois canaux internes 51a, 51b, 51cc, les canaux latéraux 51a et 51c se déduisent l'un de l'autre par translation le long de l'axe de rotation. Le volet tambour 50 peut prendre notamment quatre positions telles que définies ci-après :
- une position A, montrée sur la figure 15a, dans laquelle la zone centrale Z2 est alimentée en air, et les zones latérales Z1 et Z3 de la bouche d'aération correspondante sont fermées ;
- une position B, montrée sur la figure 15b, dans laquelle les trois zones Z1, Z2, Z3 sont alimentées en air ;
- une position C, montrée sur la figure 15c, dans laquelle seules les zones latérales Z1, Z3 de la bouche d'aération correspondante sont alimentées en air ;
- une position D montrée sur la figure 15d, dans laquelle la bouche d'aération correspondante est fermée.

A ce volet tambour 50 on peut associer des volets convergent-divergent 31a, 31b qui permettent de modifier la vitesse de sortie de l'air dans les zones Z1, Z2, Z3.

Les figures 16a, 16b et 16c montrent trois réglages des volets 31a et 31 b qui permettent de diffuser de l'air respectivement à petite vitesse, à vitesse moyenne et à grande vitesse.

Le positionnement du volet tambour 50 et des volets convergent-divergent 31a, 31b peut être réglé par actionnement manuel de molettes situées dans l'enveloppe de portée de main du conducteur ou du passager.

## Revendications

1. Dispositif de chauffage, ventilation et/ou climatisation de l'habitacle d'un véhicule automobile, du type comportant des moyens (4) de traitement d'air logeant, au moins en partie, dans un boîtier (1) muni de sorties d'air, la sortie de dégivrage et les sorties d'aération débouchant dans une face supérieure (13) du boîtier (1) et étant susceptibles d'alimenter en air traité au moins une bouche de dégivrage (10) et des bouches d'aération (29a, 29b) prévues dans une façade d'une planche de bord (12) par des conduits (23, 25a, 25b) reliant lesdites sorties auxdites bouches, ladite planche de bord comportant une façade supérieure (11) et une façade frontale,
lesdits conduits (23, 25a, 25b) étant ménagés dans un module de diffusion (14) oblong qui s'étend transversalement au-dessus de la face supérieure (13) du boîtier (1) et sous la façade supérieure (11) de la planche de bord (12), ce module (14) comportant dans sa face inférieure (16) une ouverture (17) adaptée à la forme de la face supérieure (13) du boîtier (1), et sur son bord supérieur avant les portions aval du conduit de dégivrage (23) et des conduits d'aération (25a, 25b), les portions aval des conduits d'aération (25a, 25b) s'étendant transversalement de part et d'autre du conduit de dégivrage (23) et se terminant par des bouches d'aération (29a, 29b) dirigées vers l'intérieur de l'habitacle, **caractérisé en ce que** lesdites bouches d'aération (29a,29b) sont situées dans la zone (B4) de l'enveloppe (Pb) de la planche de bord (12) située en dehors de l'intersection (A4) des enveloppes extérieures (Cg, Cd, Pg, Pd) du débattement des mains droite et gauche du conducteur et du passager, correspondant à une préhension avec trois doigts, telle que le définit la norme internationale ISO 3958 du 15/02/1996. .

2. Dispositif selon la revendication 1, **caractérisé par le fait que** le module de diffusion (14) est obtenu par assemblage de deux pièces (32, 33) à parois minces.

3. Dispositif selon la revendication 2, **caractérisé par le fait que** les portions aval des conduits d'aération (25a, 25b) sont délimitées par deux parois parallèles (24a, 24b, 27a, 27b) à section curviligne selon des plans verticaux parallèles au plan médian longitudinal de l'habitacle.

4. Dispositif selon la revendication 3, **caractérisé par le fait que** lesdites deux parois parallèles (24a, 24b, 27a, 27b) présentent des surfaces convexes du côté avant du module de diffusion.

5. Dispositif selon l'une des revendications 3 ou 4, **caractérisé par le fait que** lesdites deux parois parallèles sont reliées par une pluralité de cloisons verticales (28).

6. Dispositif selon l'une quelconque des revendications 1 à 4, **caractérisé par le fait que** les bouches d'aération (29a, 29b) sont équipées d'un système (30, 31, 31a, 31b) convergent divergent réglable permettant de faire varier les vitesses de sortie de l'air de manière à obtenir un mode de diffusion douce ou un mode de diffusion forcée.

7. Dispositif selon la revendication 6, **caractérisé par le fait que** dans le mode de diffusion douce, la surface diffusante totale des bouches d'aération est au moins égale à 2,5 dm².

8. Dispositif selon l'une quelconque des revendications 1 à 7, **caractérisé par le fait que** le module de diffusion (14) comporte des volets de distribution (34, 38) pour répartir l'air entré dans ledit module entre les conduit de dégivrage (23) et les conduits d'aération (25a, 25b).

9. Dispositif selon l'une quelconque des revendications 1 à 8, **caractérisé par le fait que** les bouches d'aération (29a, 29b) s'étendent transversalement sur toute la largeur de la planche de bord (12), le conduit de dégivrage (23) étant disposé sur l'avant du conduit d'aération (25).

10. Dispositif selon l'une quelconque des revendications 1 à 9, **caractérisé par le fait que** la portion aval de chaque conduit d'aération (25a, 25b) est équipée d'au moins un volet permettant de sélectionner les zones de sortie (Z1, Z2, Z3) du flux d'air d'aération.

11. Dispositif selon l'une quelconque des revendications 1 à 10, **caractérisé par le fait que** la portion aval de chaque conduit d'aération (25a, 25b) est équipée d'un volet tambour (50) permettant de sélectionner les zones de sortie (Z1, Z2, Z3) du flux d'air d'aération.

## Claims

1. Device for heating, ventilating and/or air conditioning the passenger compartment of a motor vehicle, of the type including air-treatment means being accommodated, at least partly, in a housing provided with air outlets, the demisting outlet and the aeration outlets opening out in a upper face of the housing and being capable of supplying treated air to at least one demisting vent and aeration vents provided in a fascia of a dashboard via ducts linking the said outlets to the said vents, the said dashboard including an upper fascia and a front fascia, the said ducts being formed in an oblong diffusion module which extends transversely above the upper face of the housing and under the upper fascia of the dashboard, this module including an aperture, in its lower face, matching the shape of the upper face of the housing, and, on its upper front edge, the downstream portions of the demisting duct and of the aeration ducts, the downstream portions of the aeration ducts extending transversely on either side of the demisting duct and terminating in aeration vents directed towards the inside of the passenger compartment **characterized in that** said aeration vents are situated in the zone of the envelope of the dashboard situated outside the intersection of the outer envelopes of the range of movement of the driver's and passenger's right and left hands, corresponding to gripping with three fingers, as defined in the international standard ISO 3958 dated February 15, 1996.

2. The device as claimed in claim 1, wherein the diffusion module is obtained by assembling two thin-walled pieces.

3. The device as claimed in claim 2, wherein the downstream portions of the aeration ducts are bounded by two parallel walls with a curvilinear section along vertical planes parallel to the median longitudinal plane of the passenger compartment.

4. The device as claimed in claim 3, wherein the said two parallel walls feature convex surfaces at the front side of the diffusion module.

5. The device as claimed in claim 3 or 4, wherein the said two parallel walls are linked by a plurality of vertical partitions.

6. The device according to one of the preceding claims 1 to 4, wherein the aeration vents are equipped with an adjustable convergent/divergent system making it possible to vary the exit speeds of the air so as to obtain a gentle-diffusion mode or a forced-diffusion mode.

7. The device as claimed in claim 6, wherein, in the gentle-diffusion mode, the total diffusing surface area of the aeration vents is at least equal to 2.5 dm².

8. The device according to one of the preceding claims 1 to 7, wherein the diffusion module includes distribution flaps for distributing the air taken into the said module between the demisting duct and the aeration ducts.

9. The device according to one of the preceding claims 1 to 8, wherein the aeration vents extend transversely over the entire width of the dashboard, the demisting duct being arranged on the front of the aeration duct.

10. The device according to one of the preceding claims 1 to 9, wherein the downstream portion of each aeration duct is equipped with at least one flap making it possible to select the outlet zones of the aeration airflow.

11. The device according to one of the preceding claims 1 to 10, wherein the downstream portion of each aeration duct is equipped with a drum flap making it possible to select the outlet zones of the aeration airflow.

## Patentansprüche

1. Vorrichtung zum Heizen, zum Belüften und/oder Klimatisieren des Fahrgastraums eines Kraftfahrzeugs, die Ausrüstungen (4) zur Behandlung von Luft aufweist, die sich zumindest teilweise in einem mit Luftaustritten versehenen Gehäuse (1) befinden, wobei der Austritt für die Entfrostung und die Austritte für die Belüftung in ein Oberteil (13) des Gehäuses (1) einmünden und mindestens eine Öffnung für die Entfrostung (10) und Belüftungsöffnungen (29a, 29b), die in einer Blende eines Armaturenbretts (12) vorgesehen sind, mit behandelter Luft versorgen können und zwar durch Leitungen (23, 25a, 25b), die die genannten Austritte mit den genannten Öffnungen verbinden, wobei das genannte Armaturenbrett eine obere Blende (11) und eine Frontblende hat, dabei werden die erwähnten Leitungen (23, 25a, 25b) in einem länglichem Diffusionsmodul (14) herangeführt, das sich querverlaufend über dem Oberteil (13) des Gehäuses (1) und unter der oberen Blende (11) des Armaturenbretts (12) erstreckt, wobei dieses Modul (14) auf seiner Unterseite (16) eine Öffnung (17) aufweist, die an die Form des Oberteils (13) des Gehäuses (1) angepasst ist und an seinem vorderen oberen Rand die abwärts gelegenen Abschnitte der Entfrostungsleitung (23) und der Belüftungsleitungen (25a, 25b) aufweist, wobei sich die abwärts gelegenen Abschnitte der Belüftungsleitung (25a, 25b) querverlaufend auf beiden Seiten der Entfrostungsleitung (23) erstrecken und in Belüftungsöffnungen (29a, 29b) enden, die in das Innere der Fahrgastzelle gerichtet sind, die sich **dadurch** auszeichnet, dass sich die erwähnten Belüftungsöffnungen (29a, 29b) im Bereich (B4) der Hüllkurve (Pb)des Armaturenbretts (12) befinden, dass sich außerhalb des Schnittpunktes (A4) der äußeren Hüllkurven (Cg, Cd, Pg, Pd) des Ausschlages der rechten und der linken Hand des Fahrers und des Beifahrers befindet, die einem Greifen mit drei Fingern entsprechen, so wie es die internationale ISO-Norm 3958 vom 15.02.1996 definiert.

2. Vorrichtung gemäß Patentanspruch 1, die **dadurch gekennzeichnet ist, dass** das Diffusionsmodul (14) durch die Verbindung von zwei Teilen (32,33) zu dünnen wänden erreicht wird.

3. Vorrichtung gemäß Patenanspruch 2, die **dadurch gekennzeichnet ist, dass** die abwärts gelegenen Abschnitte der Belüftungsleitungen (25a, 25b) von zwei parallelen Wänden (24a, 24b, 27a, 27b) mit krummlinigem Schnitt auf Lotebene parallel zur Mittelebene in Längsrichtung der Fahrgastzelle begrenzt werden.

4. Vorrichtung gemäß Patentanspruch 3, die **dadurch gekennzeichnet ist, dass** die erwähnten beiden parallelen Wände (24a, 24b,27a, 27b) an der Vorderseite des Diffusionsmoduls konvexe Oberflächen aufweisen.

5. Vorrichtung gemäß einer der Patentansprüche 3 oder 4, die **dadurch gekennzeichnet ist, dass** die erwähnten beiden parallelen wände durch mehrere vertikale Zwischenwände (28) miteinander verbunden sind.

6. Vorrichtung gemäß irgend einem der Patentansprüche 1 bis 4, die **dadurch gekennzeichnet ist, dass** die Belüftungsöffnungen (29a, 29b) mit einem regulierbaren konvergent-divergenten System (30, 31, 31a, 31b) ausgestattet sind, das eine Änderung der Austrittsgeschwindigkeit der Luft ermöglicht, so dass ein sanfter Diffusionsmodus oder ein starker Diffusionsmodus erreicht wird.

7. Vorrichtung gemäß dem Patentanspruch 6, die **dadurch gekennzeichnet ist, dass** beim sanften Diffusionsmodus die gesamte diffundierende Fläche der Belüftungsöffnungen mindestens gleich 2,5 dm² beträgt.

8. Vorrichtung gemäß irgend einer der Patentansprüche 1 bis 7, die **dadurch gekennzeichnet ist, dass** das Diffusionsmodul (14) Verteilerklappen (34, 38) aufweist, um die in das erwähnte Modul eingetretene Luft zwischen der Entfrostungsleitung (23) und den Belüftungsleitungen (25a, 25b) zu verteilen.

9. Vorrichtung gemäß irgend einer der Patentansprüche 1 bis 8, die **dadurch gekennzeichnet ist, dass** die Belüftungsöffnungen (29a, 29b) sich querverlaufend über die gesamte Breite des Armaturenbretts (12) erstrecken, wobei die Entfrostungsleitung (23) vorne an der Belüftungsleitung (25) untergebracht ist).

10. Vorrichtung gemäß einer der Patentansprüche 1 bis 9, die **dadurch gekennzeichnet ist, dass** der abwärts gerichtete Abschnitt der Belüftungsleitungen (25a, 25b) mit mindestens einer Klappe ausgestattet ist, die eine Wahl der Austrittsbereiche (Z1, Z2, Z3) der Ströme der Belüftungsluft ermöglicht.

11. Vorrichtung gemäß einer der Patentansprüche 1 bis 10, die **dadurch gekennzeichnet ist, dass** der abwärts gerichtete Abschnitt der Belüftungsleitungen (25a, 25b) mit einer Trommelklappe ausgestattet ist (50), die eine Wahl der Austrittsbereiche (Z1, Z2, Z3) der Ströme der Belüftungsluft ermöglicht.
